# EUROPÄISCHE PATENTSCHRIFT

(11) **EP 3 915 832 B1**
(45) Veröffentlichungstag und Bekanntmachung des Hinweises auf die Patenterteilung: **31.08.2022**
(21) Anmeldenummer: 21183369.4
(22) Anmeldetag: 26.04.2018
(51) Int. Cl.: B60P 3/42, B60J 5/08

(54) **TRANSPORTMITTEL**
TRANSPORT MEANS
MOYEN DE TRANSPORT

(43) Veröffentlichungstag der Anmeldung: 01.12.2021
(62) Teilanmeldung aus: 18169479.5
(73) Patentinhaber: MAGNA STEYR Fahrzeugtechnik AG & Co KG, 8041 Graz (AT)
(72) Erfinder: HÖRMANN, Reinhard, 8151 Hitzendorf (AT); PLANKA, Franz, 9433 St. Andrä (AT); PASSEGGER, Wolfgang, 8430 Tillmitsch (AT)
(74) Vertreter: Zangger, Bernd

(56) Entgegenhaltungen:
- CN-U- 203 864 608
- DE-A1- 10 016 946
- DE-A1- 10 233 745
- US-A- 5 110 171
- US-B1- 6 478 355

## Beschreibung

### Gebiet der Erfindung

Die vorliegende Erfindung betrifft ein Transportmittel, insbesondere ein Kraftfahrzeug für den Personentransport und den Warentransport.

### Stand der Technik

Es ist bekannt das Fahrzeuge für den Personen- und Warentransport eingesetzt werden können. Dabei besteht das Problem, dass bei der Beförderung von Personen Sitze benötigt werden, welche beim Transport von Waren hinderlich sind. Beim Transport von Waren besteht das Risiko, dass Beschädigungen und/oder Verschmutzungen am Fahrzeug auftreten können.

In der DE10016946A1 ist eine zusammenfaltbare Verkleidung für Kombis, Kleinbusse und dergleichen beschrieben. Dabei wird die zusammenfaltbare Verkleidung in das dafür vorgesehene Fahrzeug aufgelegt und aufgeklappt und danach, wenn es für den Personentransport vorgesehen ist, wieder aus dem Fahrzeug entfernt.

Aus der US 5 110 171 A ist ein Transportmittel gemäß dem Oberbegriff des Anspruch 1 bekannt.

### Zusammenfassung der Erfindung

Es ist eine Aufgabe der Erfindung, ein Transportmittel bereitzustellen, das für einen Personentransport und für einen Warentransport geeignet ist. Dabei sollen insbesondere Beschädigungen oder Verschmutzungen durch den Warentransport verhindert werden.

Die Lösung der Aufgabe erfolgt durch ein Transportmittel mit den Merkmalen gemäß Anspruch 1.

Erfindungsgemäß ist ein Transportmittel, insbesondere ein Kraftfahrzeug für den Personentransport und den Warentransport, umfassend zumindest einen in eine platzsparende Lagerposition bringbaren Sitz, wobei eine ausklappbare Abdeckung derart ausgebildet ist, dass sie in einer ausgeklappten Position den in die platzsparende Lagerposition gebrachten Sitz und zumindest eine Seitenwand des Transportmittels zumindest teilweise abdeckt, wobei die Abdeckung einen Klappmechanismus umfasst, wobei die Abdeckung im zusammengeklappten Zustand im Himmelbereich des Transportmittels angeordnet ist.

Mittels einer derartigen Abdeckung kann auf einfache Weise ein Transportmittel bereitgestellt werden, dass sowohl für einen Personentransport als auch für einen Warentransport optimiert ist. Durch ein in eine platzsparende Lagerposition bringen des zumindest einen Sitzes und ein Ausklappen der Abdeckung kann ein Transportmittel für den Warentransport bereitgestellt werden, so dass der Sitz und die zumindest eine Seitenwand, bevorzugt alle Seitenwände, durch die transportierten Waren nicht beschädigt oder verschmutzt werden. Der Sitz wiederum kann durch Wegklappen im Transportmittel verbleiben ohne dass dieser platzstörend Raum für die zu transportierenden Waren wegnimmt.

Erfindungsgemäß umfasst die Abdeckung einen Klappmechanismus, also Abdeckelemente, welche mittels eines Klappmechanismus verbunden sind.

Die Abdeckung ist erfindungsgemäß im zusammengeklappten Zustand im Himmelbereich des Transportmittels angeordnet.

Weiterbildungen der Erfindung sind in den abhängigen Ansprüchen, der Beschreibung sowie den beigefügten Zeichnungen angegeben.

In einer bevorzugten Ausführungsform ist der zumindest eine Sitz in den Boden des Transportmittels in die platzsparende Lagerposition bringbar, beispielsweise durch wegklappen und / oder einziehen und / oder einfahren und / oder umlegen.

Alternativ kann der Sitz auch zu einer Seitenwand, bevorzugt einer lateralen Seitenwand weggeklappt und / oder eingezogen und / oder eingefahren und / oder umgelegt werden.

Als laterale Seitenwand wird eine Seitenwand bezeichnet, die sich in Fahrzeuglängsrichtung links oder rechts zur Fahrtrichtung des Transportmittels befindet.

In einer vorteilhaften Ausführungsform sind mehrere in eine platzsparende Lagerposition bringbaren Sitze im Transportmittel angeordnet, wobei die mehreren weggeklappten Sitze durch die Abdeckung abgedeckt sind, bevorzugt vollständig.

In einer ausgeklappten Position der Abdeckung sind die lateralen Seitenwände des Transportmittels zumindest teilweise abgedeckt, bevorzugt alle vier Seitenwände des Transportmittels zumindest teilweise abgedeckt.

Bevorzugt sind in einer ausgeklappten Position der Abdeckung die Seitenwand oder die Seitenwände des Transportmittels zumindest zu 50%, bevorzugt vollständig abgedeckt.

Die Abdeckung kann auch dekorative Zwecke übernehmen, beispielsweise können auf der Abdeckung Motive aufgedruckt sein.

In einer weiteren bevorzugten Ausführungsform sind in einer ausgeklappten Position der Abdeckung der oder die in die Lagerposition bringbaren Sitze und der den Sitzen benachbarte Boden des Transportmittels zumindest teilweise abgedeckt, bevorzugt vollständig abgedeckt.

Im Boden des Transportmittels kann eine große Ausnehmung für die Sitze vorgesehen werden, oder mehrere kleine Ausnehmungen, die gerade groß genug sind, um die Sitze aufnehmen zu können. Das hat den Vorteil, dass der Teil der Abdeckung, welcher die Sitze abdeckt, nicht so ausgebildet sein muss, dass dieser Teil der Abdeckung das Gewicht der Waren beim Transport zu einem großen Teil tragen können muss.

Bevorzugt ist die Abdeckung nur ausklappbar, wenn die in die platzsparende Lagerposition bringbaren Sitze in die Lagerposition gebracht sind.

Dadurch wird verhindert, dass es zur Beschädigung der Abdeckung bzw. der Sitze kommen kann.

Dabei kann in einer bevorzugten Ausführungsform die Kinematik der in die Lagerposition bringbaren Sitze so ausgebildet sein, dass sie mit der Kinematik der Abdeckung direkt zusammenwirken. Das in die Lagerposition bringen der Sitze kann bevorzugt zusammen mit dem Ausklappen der Abdeckung über ein gemeinsames Betätigungselement ausgelöst werden.

Die Abdeckung umfasst in einer bevorzugten Ausführungsform mehrere Seitenwände und einen Boden.

Der Klappmechanismus ist bevorzugt mittels Verschlusselementen im Himmelbereich und/oder im ausgeklappten Zustand im Bodenbereich des Transportmittels gehalten.

### Kurzbeschreibung der Zeichnungen

Die Erfindung wird im Folgenden beispielhaft unter Bezugnahme auf die Zeichnungen beschrieben.
- Fig. 1: zeigt eine perspektivische Ansicht eines nicht erfindungsgemäßen Transportmittels mit eingefahrenem Abdeckrollo.
- Fig. 2: zeigt eine perspektivische Ansicht eines nicht erfindungsgemäßen Transportmittels mit ausgefahrenem Abdeckrollo.
- Fig. 3: zeigt eine Seitenansicht eines nicht erfindungsgemäßen Transportmittels mit eingefahrenem Abdeckrollo und Sitzen.
- Fig. 4: zeigt eine Seitenansicht eines nicht erfindungsgemäßen Transportmittels mit ausgefahrenem Abdeckrollo und in eine platzsparende Lagerposition gebrachten Sitzen.
- Fig. 5a: zeigt eine Ansicht von oben eines eingefahrenen Abdeckrollos.
- Fig. 5b: zeigt eine perspektivische Ansicht eines eingefahrenen Abdeckrollos.
- Fig. 6a: zeigt eine Ansicht von oben eines ausgefahrenen Rollos.
- Fig. 6b: zeigt eine perspektivische Ansicht eines ausgefahrenen Rollos.
- Fig. 7: zeigt eine perspektivische Ansicht eines erfindungsgemäßen Transportmittels mit eingeklappten Klappmechanismus.
- Fig. 8: zeigt eine perspektivische Ansicht eines erfindungsgemäßen Transportmittels mit ausgeklappten Klappmechanismus.
- Fig. 9: zeigt eine Seitenansicht eines erfindungsgemäßen Transportmittels mit eingeklappten Klappmechanismus und Sitzen.
- Fig. 10: zeigt eine Seitenansicht eines erfindungsgemäßen Transportmittels mit ausgeklappten Klappmechanismus und in eine platzsparende Lagerposition gebrachten Sitzen.
- Fig. 11a: zeigt eine Seitenansicht eines eingeklappten Klappmechanismus.
- Fig. 11b: zeigt eine perspektivische Ansicht eines eingeklappten Klappmechanismus.
- Fig. 12a: zeigt eine Seitenansicht eines ausgeklappten Klappmechanismus.
- Fig. 12b: zeigt eine perspektivische Ansicht eines ausgeklappten Klappmechanismus.

### Detaillierte Beschreibung der Erfindung

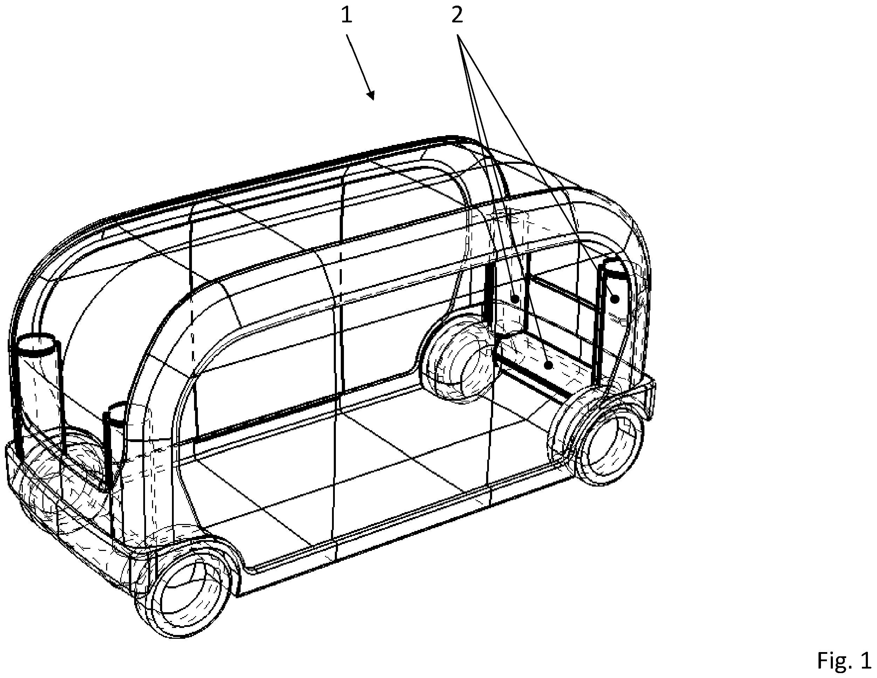

In Fig. 1 bis Fig. 6b ist ein nicht erfindungsgemäßes Transportmittel in einer ersten Ausführungsvariante dargestellt.

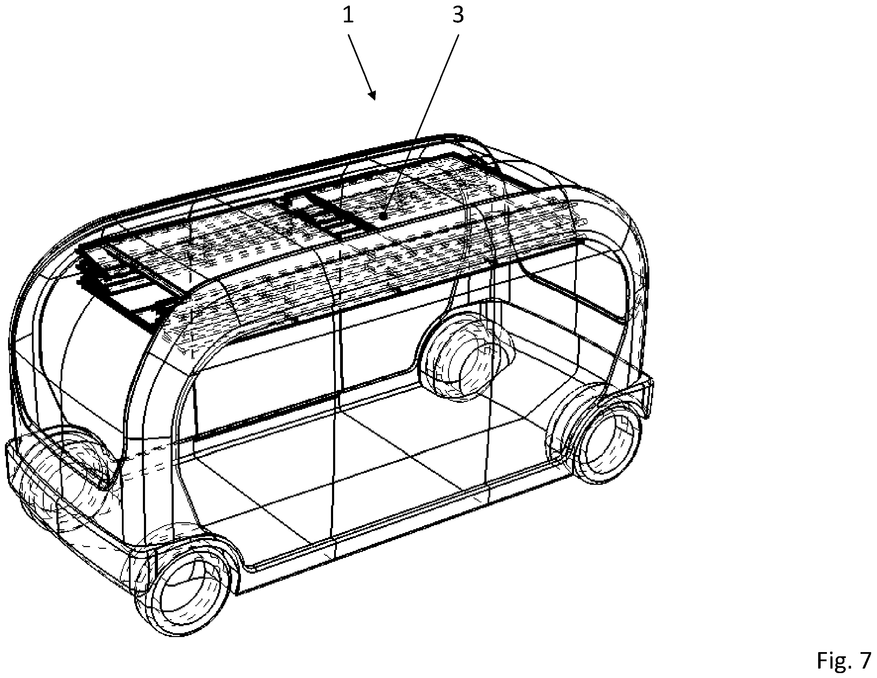

In Fig. 7 bis Fig. 12b ist ein erfindungsgemäßes Transportmittel in einer zweiten Ausführungsvariante dargestellt.

In Fig. 1 ist eine perspektivische Ansicht eines Transportmittels 1 dargestellt. Als Abdeckung dient ein Abdeckrollo 2, wobei bevorzugt für jede laterale Seitenwand oder jede Seitenwand bzw. den Boden jeweils ein Abdeckrollo 2 vorgesehen ist. In dieser Darstellung sind die Abdeckrollos 2 im eingefahrenen Zustand dargestellt, d.h. die Seitenwände bzw. der Boden sind nicht abgedeckt. Die Sitze 4 des Transportmittels 1 sind zur besseren Übersicht nicht dargestellt.

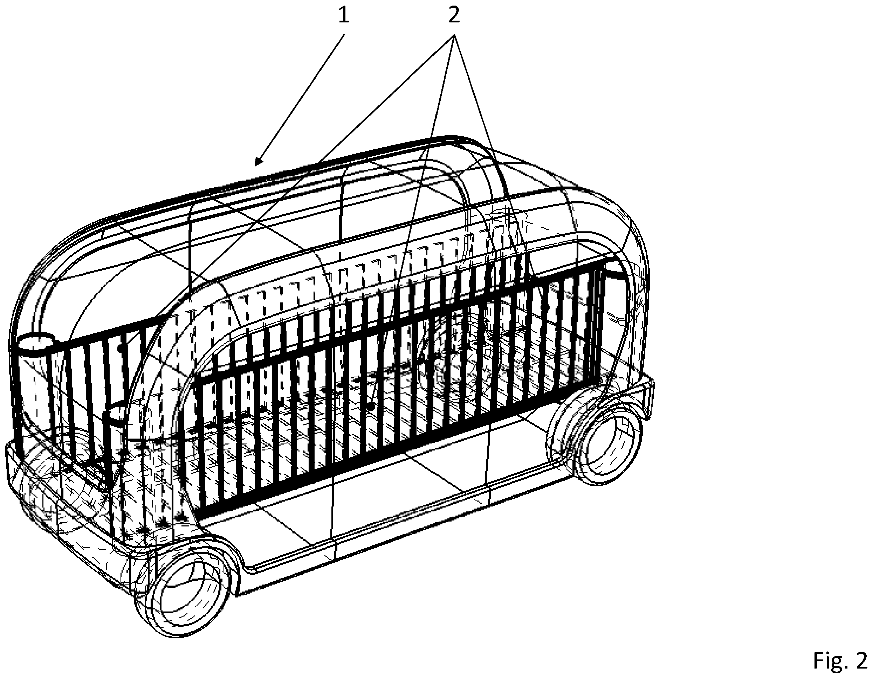

Die Abdeckung ist in Fig. 2 im ausgefahrenen Zustand dargestellt. Zwischen dem Boden des Transportmittels 1 und der Abdeckung des Abdeckrollos 2 für den Boden ist ein Hohlraum ausgebildet, in welchen die nicht dargestellten Sitze 4 in die Lagerposition bringbar sind. Die Seitenflächen vorne und hinten sind nicht abgedeckt dargestellt, können jedoch je nach Ausführungsform mittels Abdeckrollos 2 zumindest teilweise abgedeckt sein.

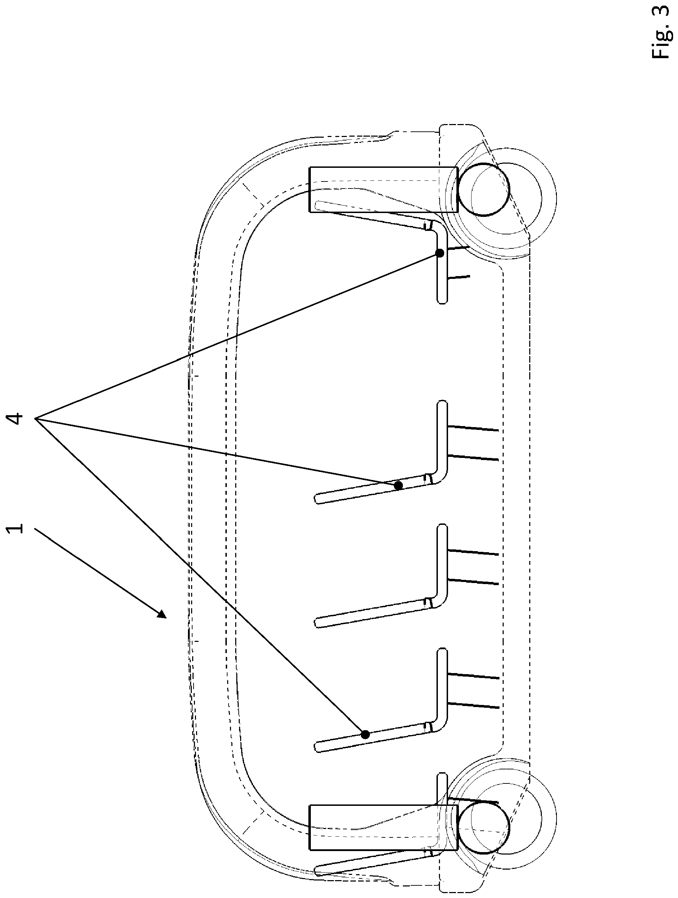

Fig. 3 zeigt eine Seitenansicht eines Transportmittels 1 mit in die Lagerposition bringbaren Sitzen 4. Die Sitze 4 können in oder gegen die Fahrtrichtung des Transportmittels 1 angeordnet sein. Die Sitze 4 können aber auch 90° gedreht zur Fahrtrichtung angeordnet sein.

Alternativ zu den Sitzen 4 können auch beispielsweise Sitzbänke verwendet werden.

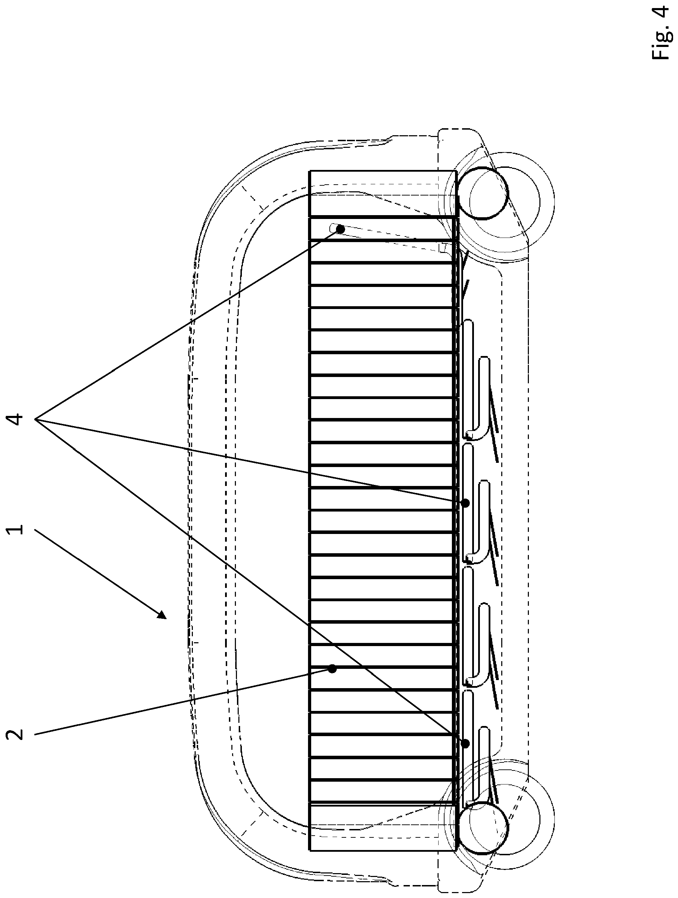

Fig. 4 zeigt eine Seitenansicht eines Transportmittels 1, wobei die Sitze 4 umgeklappt dargestellt sind und die Abdeckrollos 2 im ausgefahrenen Zustand dargestellt. Bevorzugt sind die Lehnen und Beine der Sitze 4 über Gelenke umklappbar. Die Sitze können nicht nur klappbar, sondern auch einziehbar bzw. einfahrbar bzw. umlegbar ausgeführt sein.

Die Sitze 4 und Abdeckrollos 2 können eine gemeinsame Betätigungskinematik aufweisen, welche ein einfaches Umbauen des Transportmittels 1 in einen der beiden Gebrauchszustände ermöglicht.

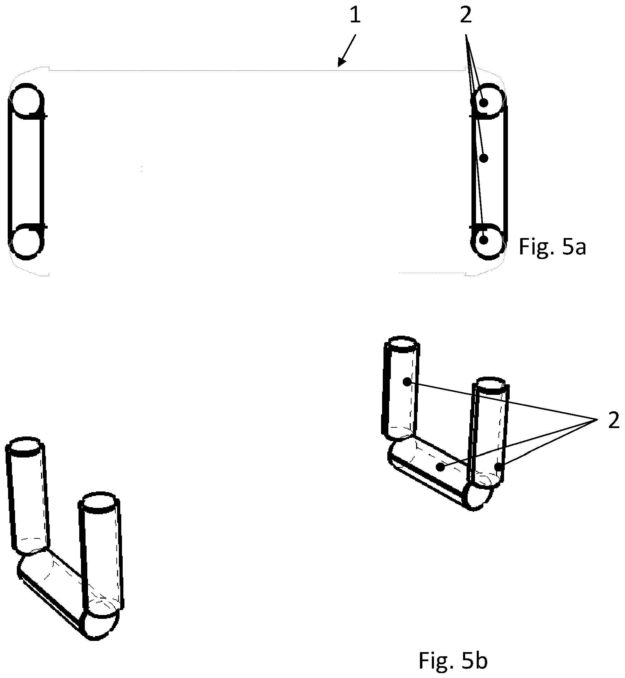

Fig. 5a zeigt eine Abdeckung in einer Ansicht von oben, wobei die Abdeckrollos 2 in eingefahrenem Zustand dargestellt sind.

In Fig. 5b ist die Abdeckung, gemäß Fig. 5a, in einer perspektivischen Ansicht dargestellt.

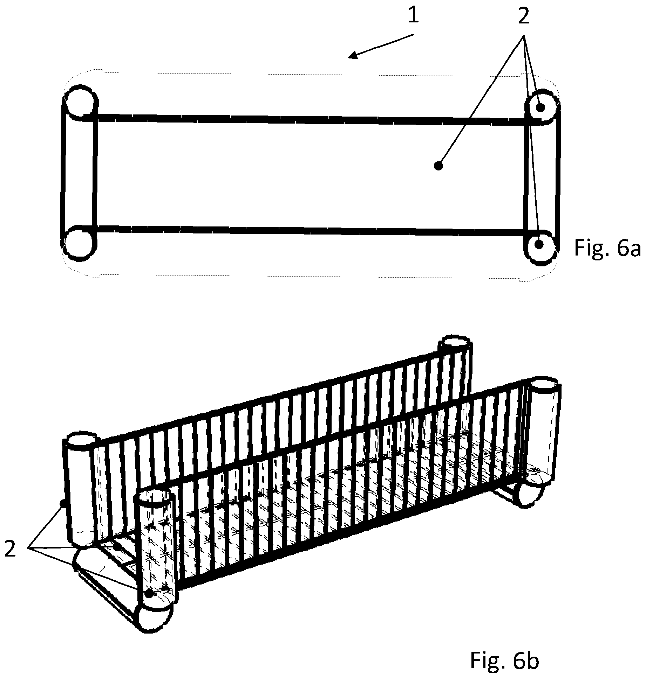

Fig. 6a zeigt die Abdeckung, nochmals in einer Ansicht von oben, jedoch im ausgefahrenen Zustand. Das Abdeckrollo 2 kann dabei vollständig, von einer Wickelrolle aus, über die ganze Länge des Transportmittels 1 ausgefahren sein, oder von hinten und von vorne her beispielsweise bis zur Mitte ausgefahren sein, wo beide Abdeckrollos 2 miteinander verbunden sind.

Fig. 6b zeigt Fig. 6a in einer perspektivischen Ansicht. Das Abdeckrollo 2 ist derart ausgebildet, dass das Gewicht von Waren problemlos getragen werden kann, ohne dass die darunterliegenden Sitze 4 beschädigt werden können.

Fig. 7 zeigt eine erfindungsgemäße Ausführungsform einer Abdeckung für ein Transportmittel 1 in einer perspektivischen Ansicht. Zur Abdeckung wird ein Klappmechanismus 3 verwendet, welcher im Himmelbereich des Transportmittels 1 im zusammengeklappten Zustand angeordnet ist und mittels geeigneten Verschlusselementen dort gehalten wird.

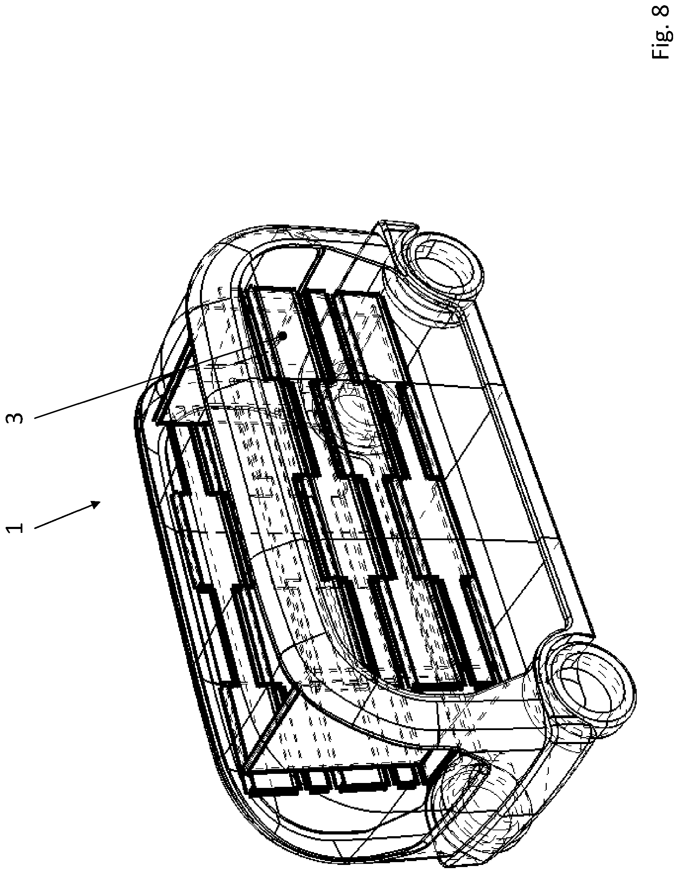

Fig. 8 zeigt den Klappmechanismus 3 im ausgeklappten Zustand, also mit ausgeklappten Abdeckelementen, wobei zwischen dem Boden des Transportmittels 1 und dem Boden des Klappmechanismus 3 ein Hohlraum ausgebildet ist, in welchem die nicht dargestellten Sitze 4 weggeklappt angeordnet sind. Der Klappmechanismus 3 ist mit geeigneten Verschlusselementen mit dem Transportmittel 1 verbunden.

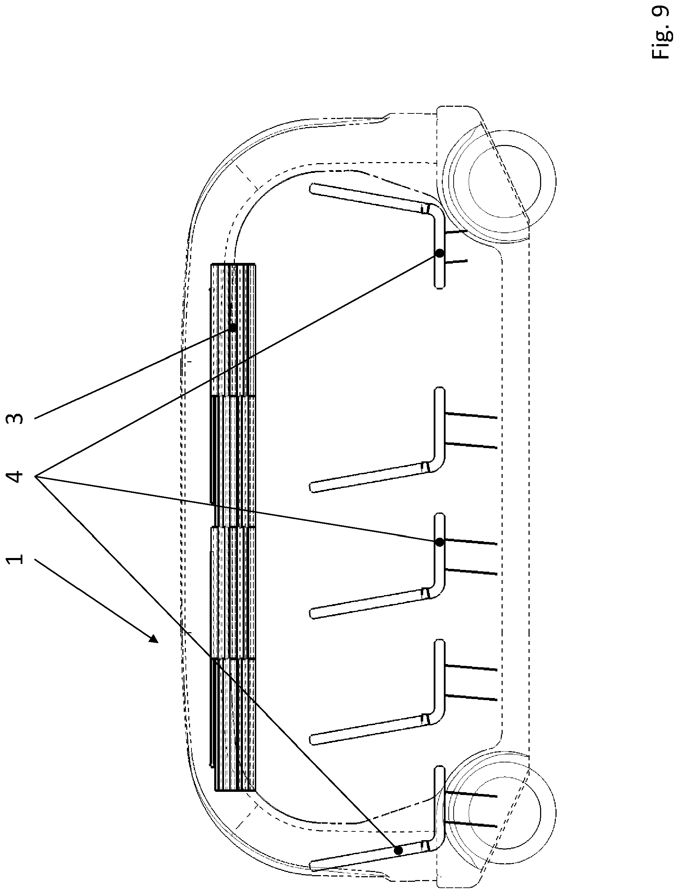

Fig. 9 zeigt ein Transportmittel 1 in einer Seitenansicht, wobei die Sitze 4 in die Lagerposition gebracht dargestellt sind und der Klappmechanismus 3 im Himmelbereich des Transportmittels 1 angeordnet ist.

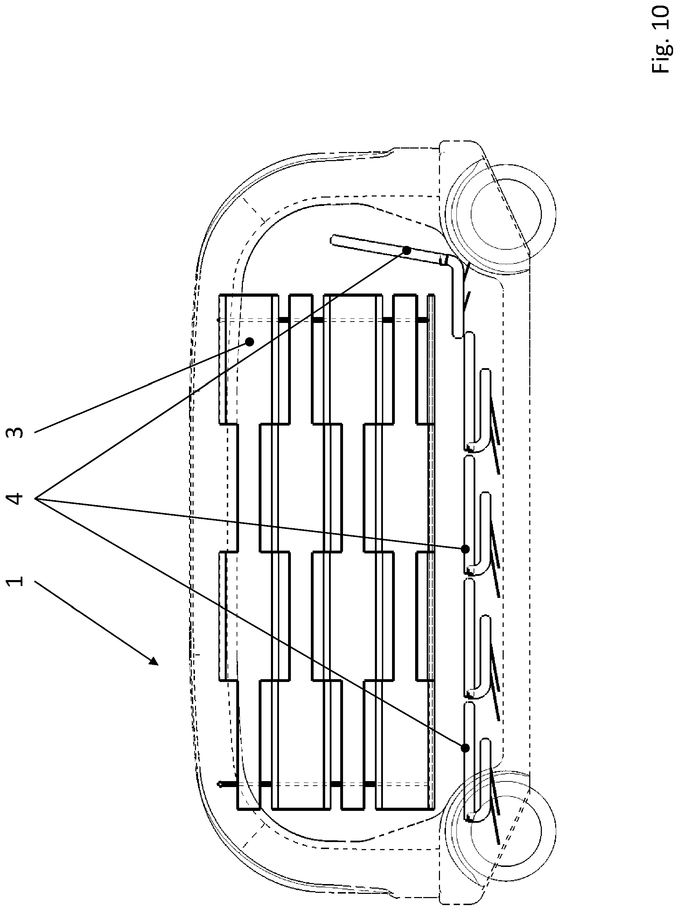

Fig. 10 zeigt eine weitere Seitenansicht des Transportmittels 1. Die Im Bereich des Klappmechanismus 3 angeordneten Sitze 4 sind vollständig umgeklappt, während Sitze 4 die außerhalbe des Klappmechanismus 3 angeordnet sind nicht oder nur teilweise umgeklappt werden.

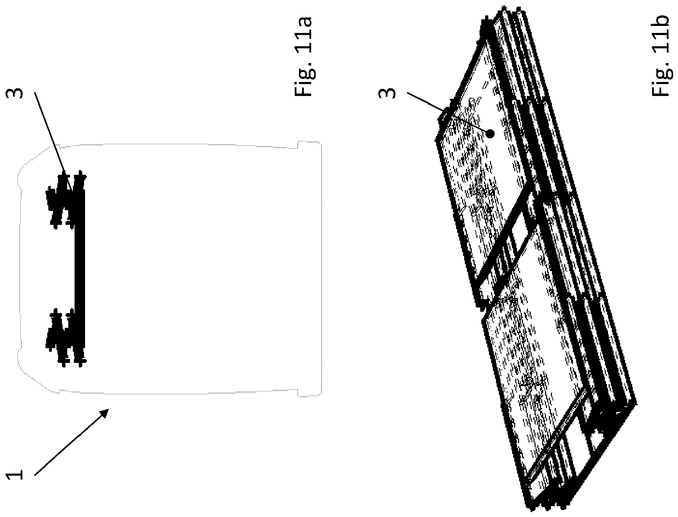

Fig. 11a zeigt den Klappmechanismus 3 in einer Seitenansicht in eingeklapptem Zustand. Der Klappmechanismus 3 ist dabei im Himmelbereich des Transportmittels 1 platzsparend angeordnet.

Fig. 11b zeigt denselben Klappmechanismus 3 gemäß Fig. 11a in einer perspektivischen Ansicht.

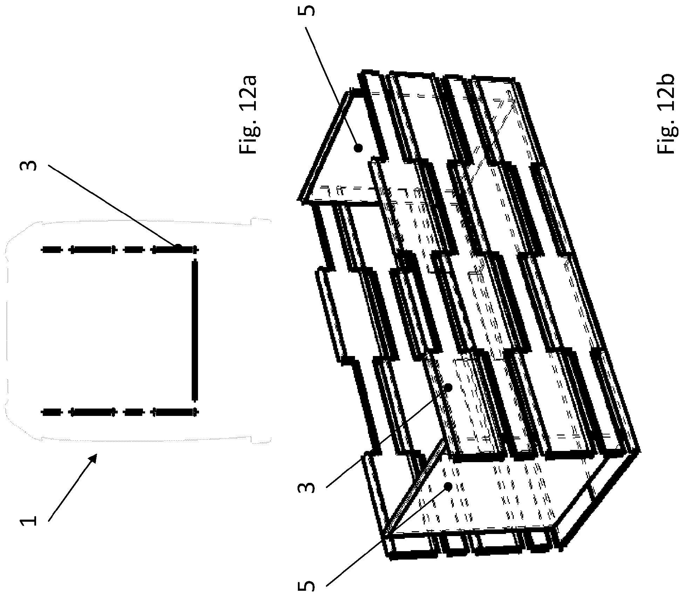

Fig. 12a zeigt den Klappmechanismus 3 im ausgeklappten Zustand in einer Seitenansicht von vorne.

Fig. 12b zeigt den Klappmechanismus 3 in ausgeklappten Zustand gemäß Fig. 12a, wobei der Klappmechanismus 3 an der Vorderseite und der Hinterseite des Transportmittels 1 ebenfalls eine zusätzliche Verkleidung 5 aufweist, die eine Verschmutzung oder Beschädigung der vorderen und hinteren Seitenwände des Transportmittels 1 verhindern. Diese zusätzliche Verkleidung 5 wird dabei bevorzugt durch Schwenken nach unten in Position gebracht und am Boden und an den Seitenwänden arretiert. Alternativ kann die Verkleidung 5 durch Stecken in den Boden bzw. den lateralen Seitenwänden des Klappmechanismus 3 mit diesem verbunden werden. Die Verkleidung 5 übernimmt neben der Funktion zur Vermeidung einer Verschmutzung oder Beschädigung auch die Funktion der Stabilisierung des Klappmechanismus 3.

### Bezugszeichenliste

- 1: Transportmittel
- 2: Abdeckrollo
- 3: Klappmechanismus
- 4: Sitz
- 5: Verkleidung

## Patentansprüche

1. Transportmittel (1), insbesondere ein Kraftfahrzeug für den Personentransport und den Warentransport, umfassend zumindest einen in eine platzsparende Lagerposition bringbaren Sitz (4), wobei eine ausklappbare Abdeckung (2, 3) derart ausgebildet ist, dass sie in einer ausgeklappten Position den weggeklappten Sitz (4) und zumindest eine Seitenwand des Transportmittels (1) zumindest teilweise abdeckt, **dadurch gekennzeichnet , dass** die Abdeckung einen Klappmechanismus (3) umfasst, wobei die Abdeckung im zusammengeklappten Zustand im Himmelbereich des Transportmittels (1) angeordnet ist.

2. Transportmittel (1) nach Anspruch 1,
**dadurch gekennzeichnet , dass** der zumindest eine Sitz (4) dadurch in die platzsparende Lagerposition bringbar ist, dass der Sitz (4) wegklappbar und / oder einziehbar und / oder einfahrbar und / oder umlegbar ist, insbesondere in den Boden des Transportmittels (1)

3. Transportmittel (1) nach Anspruch 1 oder 2,
**dadurch gekennzeichnet , dass** mehrere in eine platzsparende Lagerposition bringbare Sitze (4) im Transportmittel (1) angeordnet sind, wobei die mehrere in eine platzsparende Lagerposition bringbaren Sitze (4) durch die Abdeckung (2, 3) abgedeckt sind, bevorzugt vollständig.

4. Transportmittel (1) nach zumindest einem der vorhergehenden Ansprüche,
**dadurch gekennzeichnet , dass** in einer ausgeklappten Position der Abdeckung (2, 3) die lateralen Seitenwände des Transportmittels (1) zumindest teilweise abgedeckt sind, bevorzugt alle vier Seitenwände des Transportmittels (1) zumindest teilweise abgedeckt sind.

5. Transportmittel (1) nach Anspruch 4,
**dadurch gekennzeichnet , dass** in einer ausgeklappten Position der Abdeckung (2, 3) die Seitenwand oder die Seitenwände des Transportmittels (1) zumindest zu 50%, oder zumindest zu 80%, besonders bevorzugt vollständig abgedeckt sind.

6. Transportmittel (1) nach zumindest einem der vorhergehenden Ansprüche,
**dadurch gekennzeichnet , dass** in einer ausgeklappten Position der Abdeckung (2, 3) der oder die in eine platzsparende Lagerposition bringbaren Sitze (4) und der den Sitzen (4) benachbarte Boden des Transportmittels (1) zumindest teilweise abgedeckt sind, bevorzugt vollständig abgedeckt sind.

7. Transportmittel (1) nach zumindest einem der vorhergehenden Ansprüche,
**dadurch gekennzeichnet , dass** die Abdeckung (2, 3) nur ausklappbar ist, wenn die wegklappbaren Sitze (4) weggeklappt sind.

8. Transportmittel (1) nach zumindest einem der vorhergehenden Ansprüche,
**dadurch gekennzeichnet , dass** die Abdeckung mehrere Seitenwände und einen Boden umfasst.

9. Transportmittel (1) nach zumindest einem der vorhergehenden Ansprüche,
**dadurch gekennzeichnet , dass** der Klappmechanismus (3) mittels Verschlusselementen im Himmelbereich und/oder im ausgeklappten Zustand im Bodenbereich des Transportmittels (1) gehalten ist.

## Claims

1. Transport means (1), in particular a motor vehicle for the transport of passengers and the transport of goods, comprising at least one seat (4) which may be moved into a space-saving stowed position, wherein a fold-out cover (2, 3) is configured such that in an fold-out position it at least partially covers the folded-away seat (4) and at least one side wall of the transport means (1), **characterized in that** the cover comprises a folding mechanism (3), the cover being arranged in the folded-together state in the roof region of the means of transport (1).

2. Transport means (1) according to Claim 1, **characterized in that** the at least one seat (4) may be moved, in particular into the floor of the transport means (1) into the space-saving stowed position, by the seat (4) being able to be folded away and/or pulled in and/or retracted and/or folded down.

3. Transport means (1) according to Claim 1 or 2, **characterized in that** a plurality of seats (4) which may be moved into a space-saving stowed position are arranged in the transport means (1), wherein the plurality of seats (4) which may be moved into a space-saving stowed position are covered, preferably entirely, by the cover (2, 3).

4. Transport means (1) according to at least one of the preceding claims, **characterized in that** in an fold-out position of the cover (2, 3) the lateral side walls of the transport means (1) are at least partially covered, preferably all four side walls of the transport means (1) are at least partially covered.

5. Transport means (1) according to Claim 4, **characterized in that** in an fold-out position of the cover (2, 3) the side wall or the side walls of the transport means (1) are covered by at least 50%, or by at least 80%, particularly preferably entirely covered.

6. Transport means (1) according to at least one of the preceding claims, **characterized in that** in an fold-out position of the cover (2, 3) the seat(s) (4) which may be moved into a space-saving stowed position and the floor of the transport means (1) adjacent to the seats (4) are at least partially covered, preferably entirely covered.

7. Transport means (1) according to at least one of the preceding claims, **characterized in that** the cover (2, 3) is only able to be folded out if the seats (4) which are able to be folded away are folded away.

8. Transport means (1) according to at least one of the preceding claims, **characterized in that** the cover comprises a plurality of side walls and a bottom.

9. Transport means (1) according to at least one of the preceding claims, **characterized in that** the folding mechanism (3) is held by means of locking elements in the roof region and/or in the unfolded state in the floor region of the transport means (1).

## Revendications

1. Moyen de transport (1), notamment véhicule automobile destiné au transport de personnes et de marchandises, ledit moyen de transport comportant au moins un siège (4) pouvant être amené dans une position de rangement peu encombrante, un recouvrement extensible (2, 3) étant conçu de manière à recouvrir, dans une position étendue, au moins partiellement le siège déployé (4) et au moins une paroi latérale du moyen de transport (1), **caractérisé en ce que** le recouvrement comprend un mécanisme de pliage (3), le recouvrement étant disposé dans la zone de toit du moyen de transport (1) lorsqu'il est replié.

2. Moyen de transport (1) selon la revendication 1,
**caractérisé en ce que** l'au moins un siège (4) peut être amené dans la position de rangement peu encombrante **en ce que** le siège (4) est rabattable et/ou escamotable et/ou rétractable et/ou pliant, en particulier dans le plancher du moyen de transport (1)

3. Moyen de transport (1) selon la revendication 1 ou 2,
**caractérisé en ce qu'**une pluralité de sièges (4) pouvant être amenés dans une position de rangement peu encombrante sont disposés dans le moyen de transport (1), la pluralité de sièges (4) pouvant être amenés dans une position de rangement peu encombrante étant recouverts, de préférence entièrement, par le recouvrement (2, 3).

4. Moyen de transport (1) selon l'une au moins des revendications précédentes,
**caractérisé en ce que** dans une position étendue du recouvrement (2, 3) les parois latérales du moyen de transport (1) sont au moins partiellement recouvertes, de préférence les quatre parois latérales du moyen de transport (1) sont au moins partiellement recouvertes.

5. Moyen de transport (1) selon la revendication 4,
**caractérisé en ce que** dans une position étendue du recouvrement (2, 3) la paroi latérale ou les parois latérales du moyen de transport (1) sont recouvertes au moins à 50 %, ou au moins à 80 %, de manière particulièrement préférée entièrement.

6. Moyen de transport (1) selon l'une au moins des revendications précédentes,
**caractérisé en ce que** dans une position étendue du recouvrement (2, 3) le ou les sièges (4) pouvant être amenés dans une position de rangement peu encombrante et le plancher du moyen de transport (1) qui est adjacent aux sièges (4) sont au moins partiellement recouverts, de préférence entièrement recouverts.

7. Moyen de transport (1) selon l'une au moins des revendications précédentes,
**caractérisé en ce que** le recouvrement (2, 3) n'est extensible que lorsque les sièges rabattables (4) sont rabattus.

8. Moyen de transport (1) selon l'une au moins des revendications précédentes,
**caractérisé en ce que** le recouvrement comprend une pluralité de parois latérales et un fond.

9. Moyen de transport (1) selon l'une au moins des revendications précédentes,
**caractérisé en ce que** le mécanisme de pliage (3) est maintenu au moyen d'éléments de fermeture dans la zone de toit et/ou à l'état étendu dans la zone de plancher du moyen de transport (1).
